(19) Europäisches Patentamt
European Patent Office
Office européen des brevets

(11) Veröffentlichungsnummer: **0 159 035**
**A2**

# (12) EUROPÄISCHE PATENTANMELDUNG

(21) Anmeldenummer: **85104685.4**

(22) Anmeldetag: **18.04.85**

(51) Int. Cl.[4]: **C 08 G 59/42**
C 04 B 26/14, C 08 L 63/00

(30) Priorität: **18.04.84 DE 3414769**

(43) Veröffentlichungstag der Anmeldung:
**23.10.85 Patentblatt 85/43**

(84) Benannte Vertragsstaaten:
**AT CH DE FR LI NL**

(71) Anmelder: **PCI Polychemie GmbH**
**Piccardstrasse 10**
**D-8900 Augsburg 1(DE)**

(72) Erfinder: **Psader, Josef**
**J.S.Bach-Strasse 12**
**D-8902 Neusäss(DE)**

(72) Erfinder: **Huber, Manfred, Dipl.-Ing.**
**Donauwärther Strasse 36**
**D-8901 Königsbrunn(DE)**

(72) Erfinder: **Kucera, Wolfgang**
**Finkenweg 36**
**D-8900 Augsburg 1(DE)**

(74) Vertreter: **Hansen, Bernd, Dr.rer.nat. et al,**
**Hoffmann, Eitle & Partner Patentanwälte Arabellastrasse 4**
**D-8000 München 81(DE)**

## (54) Verwendung von reaktiven Verdünnern für Epoxidharze, sowie Epoxidharzmasse.

(57) Verwendung von Verbindungen der Formel

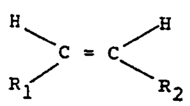

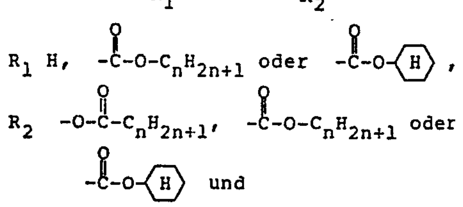

n eine ganze Zahl von 1 bis 19 bedeuten, mit der Einschränkung, dass bei $R_1$ = H der Rest $R_2$

$$-O-\overset{\overset{O}{\|}}{C}-C_nH_{2n+1}$$

darstellt, als reaktive Verdünner für Epoxidharze. Die Epoxidharzmassen mit dem reaktiven Verdünner sind als Reparaturmörtel, Fugenmasse, Beschichtungsmasse oder Injektionsmasse für Betonbauten mit Vorteil einsetzbar.

EP 0 159 035 A2

Verwendung von reaktiven Verdünnern für Epoxidharze, sowie Epoxidharzmasse

Die Erfindung betrifft die Verwendung von reaktiven Verdünnern für Epoxidharze, sowie Epoxidharzmassen.

Bei Raumtemperatur vernetzbare Massen auf Epoxidharzbasis werden beispielsweise zum Anstreichen, Beschichten, Injizieren, Einlassgrundieren, Versiegeln, Spachteln, Mörteln, Verkleben oder Fugenfüllen und für den Korrosionsschutz eingesetzt. Bei der Formulierung von Harz/Härter-Systemen aus Epoxidharzen mit aliphatischen oder cycloaliphatischen Polyaminen für solche Zwecke ergeben sich oft Probleme hinsichtlich der Verarbeitbarkeit - insbesondere wegen zu kurzer Verarbeitungszeit - aufgrund relativ hoher Viskosität des

Epoxidharz/Aminhärter-Gemisches, die eine entsprechende Modifizierung erfordern. Zu diesem Zweck ist es nach dem Stand der Technik üblich, Epoxidharze, deren Viskositäten in unmodifiziertem, d.h. nicht-verdünntem Zustand, meist im Bereich von 1.000 bis 13.000 mPas liegen, mit niedrigviskosen Lösungsmitteln, Weichmachern oder Epoxidgruppen aufweisenden reaktiven Verdünnern, die Umsetzungsprodukte aus Alkoholen bzw. Phenolen mit Epichlorhydrin sind, zu versetzen.

Der bisher häufig eingeschlagene Weg, die Viskosität der Epoxidharzkomponente durch Zugabe flüssiger, niedrigviskoser Lösungsmittel, wie Toluol, Xylol, Ethanol, Isopropanol, n-Butanol, Methylglykol, Ethylglykol und Butylglykol, oder Weichmacher, wie Dibutylphthalat, Dioctylphthalat, Triphenylphosphit und Trikresylphosphat, zu senken, hat aber den Nachteil, dass der Masse flüchtige, an der Vernetzung nicht teilnehmende Produkte eingemischt werden, die durch nachträgliche Verdunstung das System schwächen oder eluierbar sind. Aus diesen Gründen hat sich hauptsächlich für mehrfunktionelle höherviskose Epoxidverbindungen die Zugabe von monofunktionellen Reaktiv-Verdünnern, wie n-Butyl-, p-tert.-Butylphenyl-, 2-Ethylhexyl-, Kresyl-, sowie Isocetylglycidylethern und von difunktionellen Reaktiv-Verdünnern, wie Hexandiol- sowie Neopentyldiglycidylether, eingebürgert, die an der chemischen Reaktion teilnehmen und so fest im System verankert sind. Derartige reaktive Verdünner haben aber - von ihren hohen Kosten abgesehen - den Nachteil, bei Hautkontakt leicht Allergien hervorrufen zu können und insbesondere in den Formulierungen relativ starkes

Schwinden zu verursachen. Auch unter den Aspekten der in jüngster Zeit immer mehr in das öffentliche Bewusstsein gerückten Arbeitsplatzhygiene und des Umweltschutzes sind die den Epoxidharzen zur Viskositätsminderung bisher üblicherweise zugesetzten Lösungsmittel, Weichmacher oder Reaktiv-Verdünner der vorgenannten Art wegen ihrer Feuergefahr, Verflüchtigung, physiologischen Beeinträchtigung und häufigen Verursachung von Allergien mit Nachteilen behaftet.

Der Erfindung liegt daher die Aufgabe zugrunde, ein Mittel zur Viskositätserniedrigung von Epoxidharzen zu finden, das die vorstehend für Lösungsmittel, Weichmacher und bestimmte Reaktiv-Verdünner erwähnten Nachteile nicht zeigt, in Harz/Härter-Systemen aus Epoxidharzen mit vor allem aliphatischen oder cycloaliphatischen Polyaminen homogen verträglich ist und die Vernetzung bei Raumtemperatur nicht behindert. Insbesondere sollen hierdurch Massen auf Epoxidbasis geschaffen werden, die unter Vermeidung von bzw. mit sehr geringem Schwund als Reparaturmörtel, Beschichtungsmasse, Injektionsharz und Fugenmasse geeignet sind.

Erfindungsgemäss wird diese Aufgabe durch Verwendung von Verbindungen der Formel

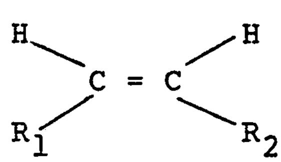

wobei

$R_1$ H, $-\overset{O}{\overset{\|}{C}}-O-C_nH_{2n+1}$ oder 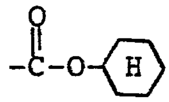 ,

$R_2$ $-O-\overset{O}{\overset{\|}{C}}-C_nH_{2n+1}$, $-\overset{O}{\overset{\|}{C}}-O-C_nH_{2n+1}$ oder

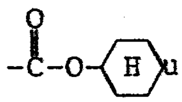 und

n eine ganze Zahl von 1 bis 18 bedeuten, mit der Einschränkung, dass bei $R_1$=H der Rest $R_2$

$-O-\overset{O}{\overset{\|}{C}}-C_nH_{2n+1}$ darstellt, als reaktive Verdünner für Epoxidharze, in einer Menge von 10 bis 40 Gew.%, bezogen auf die Gesamtzusammensetzung aus Epoxidharz, Härter und ggf. Füllstoffen, gelöst.

Im Rahmen der erfindungsgemässen Verwendung sind Verbindungen des vorgenannten Typus, wobei $R_1$ und $R_2$ jeweils

$$-\overset{O}{\overset{\|}{C}}-O-C_nH_{2n+1}$$

bedeuten, wobei n eine ganze Zahl zwischen 1 und 18 sein kann, besonders bevorzugt.

Die Zahl n kann im Bereich von 1 bis 18 mit Vorteil liegen, wobei es sich als besonders günstig herausgestellt hat, wenn n eine ganze Zahl im Bereich zwischen 2 und 12 darstellt. Besonders bevorzugt verwendete Verbindungen weisen jedoch Zahlenwerte für n im Bereich von 2 bis 8 auf. Somit kann n insbesondere die Werte 2, 3, 4, 5, 6, 7, 8, 9, 10, 11 oder 12 annehmen.

Im Rahmen der erfindungsgemässen Verwendung sind auch solche Verbindungen besonders bevorzugt einsetzbar, in denen

$R_1$ = H und

$$R_2 = -O-\overset{\overset{\displaystyle O}{\|}}{C}-C_nH_{2n+1},$$

wobei die vorstehenden Ausführungen zu dem Wert von n sinngemäss gelten.

Als Typen bevorzugt einsetzbarer konkreter Verbindungen gemäss der erfindungsgemässen Verwendung werden beispielhaft die besonders vorteilhaften Maleinsäure-di-n-ethylester, Fumarsäure-di-n-ethylester oder Vinylpropionat angeführt.

Die erfindungsgemäss verwendeten reaktiven Verdünner finden üblicherweise in einer Menge von 10 bis 40 Gew.%, bezogen auf die Gesamtzusammensetzung aus Epoxidharz, Härter und gegebenenfalls Füllstoffen, Anwendung. Besonders günstige Werte werden aber häufig schon dann erhalten, wenn die Menge der erfindungsgemäss verwendeten Verbindungen 15 bis 25 Gew.%, bezogen auf die Gesamtzusammensetzung, aus Epoxidharz, Härter und gegebenenfalls Füllstoffen beträgt.

Bezüglich des einsetzbaren Epoxidharzes bestehen im Rahmen der Erfindung keine speziellen Beschränkungen. Das Schwergewicht der vorliegenden Erfindung liegt jedoch auf solchen Epoxidharzen, die bei Raumtemperatur mit Härtersystemen, wobei keine flüchtigen Verbindungen vorliegen, ausgehärtet und insbesondere vernetzt

werden können. Solche Epoxidharze sind dem Fachmann bekannt, wobei lediglich zur Erläuterung auf die nachfolgenden Beispiele zusätzlich verwiesen wird. Hierbei kommen vorteilhaft insbesondere solche Epoxidharze in Betracht, deren Viskosität im unmodifizierten, d.h. nicht-verdünnten Zustand, im Bereich von 1.000 bis 13.000 mPas liegen.

Im Rahmen der Erfindung werden auch Epoxidharze mit einem Gehalt der vorstehend definierten Verbindungen in einer Menge von 10 bis 40 Gew.%, bezogen auf die Gesamtzusammensetzung aus Epoxidharz, Härter und gegebenenfalls üblichen Zuschlagstoffen, erfasst, wobei die Epoxidharzmasse von flüchtigen, an der Aushärtung nicht teilnehmenden Lösungsmitteln frei ist. Diese Epoxidharzmassen dienen insbesondere als bei Raumtemperatur aushärtbare Reparaturmörtel, Fugenmassen, Beschichtungsmassen, vorteilhaft zum Korrosionsschutz oder als Injektionsmassen für Betonbauten.

Die Zugabe der erfindungsgemäss verwendeten reaktiven Verdünner erfolgt üblicherweise vor der Aushärtung der Epoxidharze. Dabei können die reaktiven Verdünner einzeln oder in Kombination zugefügt werden.

Die Härtung der Epoxidharzmassen kann auf konventionelle Weise vorgenommen werden. Dabei werden häufig Aminhärter eingesetzt, wobei die entsprechenden aliphatischen, cycloaliphatischen oder anderen Härtungsmittel dem Fachmann an sich bekannt sind. Die erfindungsgemäss verwendeten reaktiven Verdünnungsmittel vermögen ebenfalls mit dem Härtungsmittel, je nach

dessen Typ, zu reagieren. Daher kann es günstig sein, die Menge des Aminhärtungsmittels gegebenenfalls gegenüber den üblichen Werten zu erhöhen.

Die Reaktion vorgenannter reaktiver Verdünner mit dem Amin ist spontan, exotherm und lässt sich durch die Wahl sterisch gehinderter Amine in der Geschwindigkeit steuern. Der im Rahmen der Erfindung einsetzbare Maleinsäure-di-n-ethylester ist geruchsfrei, nicht toxisch, niedrigviskos, gut verträglich mit Epoxidharzen und aufgrund dieser Eigenschaften besonders gut geeignet.

Bei der Verdünnung von Epoxidharz ARALDIT GY 260 (Ciba-Geigy; frei von Reaktiv-Verdünner) mit Maleinsäure-di-n-ethylester (MDE) und Härtung mit Trimethylhexamethylendiamin (TMD) wurden folgende Kennzahlen ermittelt:

| Reaktive Verdünner/Epoxidharze | MDE | GY 260 | GY 260/MDE (15%) |
|---|---|---|---|
| Viskosität mPas (25°C) | 5 | 14.000 | 1.600 |
| Druckfestigkeit $N/mm^2$ | | 72 | 93 |
| Biegezugfestigkeit $N/mm^2$ | | 31 | 36 |

Überraschenderweise wird durch den erfindungsgemässen Einsatz von MDE nicht nur eine deutliche Viskositätserniedrigung des Epoxidharzes erreicht, sondern auch eine Erhöhung der Biegezug- und Druckfestigkeit in erhärtetem Zustand erzielt. Weiterhin wird auch die Flexibilität verbessert. Die Chemikalienbeständigkeit ist sehr gut.

Ein Vorteil gegenüber den reaktiven Verdünnern auf Epoxidbasis ist auch darin zu sehen, dass bei der Eliminierung der Doppelbindung eine Verlängerung des C-C-Abstandes eintritt, wodurch der Schrumpfreaktion des Epoxides eine "Quellung" entgegenwirkt. Die niedrige Viskosität des Maleinsäure-di-n-ethylesters erlaubt auch eine höhere Füllung der damit hergestellten Produkte.

Im Rahmen der Erfindung sind auch Verfahren zur Herstellung von Beschichtungsmassen umfasst, die z.B. als Reparaturmörtel, Fugenmassen, Injektionsharze für Betonbauten, sowie als streichfähige Bedeckungen etc., eingesetzt werden können. Bei diesen Verfahren geht man häufig in bevorzugter Weise so vor, dass das Epoxidharz und der reaktive Verdünner vermischt und hiernach oder alternativ zuvor bereits Füllstoffe und Additive, wie z.B. Pigmente, zugegeben werden. Das Gemisch aus Epoxidharz, Verdünner, Füllstoffen und Additiven wird sodann mit einem Rührwerk homogenisiert.

Die Vermischung erfolgt üblicherweise bei einer Temperatur von 10 bis 40°C, wobei Temperaturen zwischen 20 und 30°C und insbesondere von etwa 25°C bevorzugt sind. Die Rührgeschwindigkeiten können variieren und liegen üblicherweise im Bereich von ca. 50 bis 800 Upm, wobei Bereiche zwischen 200 und 600 Upm bevorzugt sind. Die Vermischungszeiten liegen häufig vorzugsweise im Bereich von 1 bis 30 Minuten, wobei Vermischungszeiten von 5 bis 15 Minuten besonders günstig sind.

Als Rührgeräte dienen übliche Rührkessel, z.B. aus Stahl, wobei herkömmliche Dissolver oder Planetenrührer angewandt werden können.

Die homogene Mischung aus Epoxidharz, reaktivem Verdünner und erforderlichenfalls Füllstoffen, sowie weiteren Additiven, z.B. Pigmenten, wird in der Regel an der Produktionsstätte portionsweise abgefüllt und an der Baustelle vor der Verarbeitung mit dem Härter abgemischt. Als Härter werden zweckmässig Amine in üblicher Weise eingesetzt.

Die Erfindung wird durch die folgenden Beispiele näher erläutert, ohne diese jedoch darauf zu beschränken.

Beispiel 1

| | Viskosität (25°C) | Epoxidwert |
|---|---|---|
| 80 g Epoxidharz EUREPOX 773 (Schering) | 11.000-13.000 mPas | 0,51-0,54 |
| 20 g Maleinsäure-di-n-ethylester | 5 mPas | --- |
| 100 g modifiziertes Epoxidharz | 400 mPas | 0,52 |

Das modifizierte Epoxidharz hat einen dem Epoxidwert 0,52 äquivalenten Anteil an reaktiven Gruppen und kann mit üblichen Aminhärtern vernetzt werden. Man gibt z.B. zu obigem Gemisch 20 g Trimethylhexamethylendiamin. Durch die exotherme Reaktion zwischen der aktivierten Doppelbindung des Maleinsäure-di-n-ethylesters

und dem Trimethylhexamethylendiamin kommt die Reaktion in Gang und erreicht nach 6 Stunden das Gelstadium. Die Vernetzung ist nach 3 Tagen abgeschlossen. Dabei wird Shore-A-Härte 70 erreicht.

Beispiel 2

| | Viskosität (25°C) | Epoxidwert |
|---|---|---|
| 90 g Epoxidharz BECKOPOX EP 140 (Reichold-Albert) | 9.000-12.000 mPas | 0,52-0,55 |
| 10 g Maleinsäure-di-n-ethylester | 5 mPas | --- |
| 100 g modifiziertes Epoxidharz | 350 mPas | 0,50 |

Nach Zugabe von 12 g Diethylentriamin und 6 g Dimethylhexamethylendiamin setzt nach 3 Minuten eine exotherme Reaktion ein und nach 24 Stunden ist die Härtung beendet. Die Shore-A-Härte beträgt 96.

Beispiel 3

| | Viskosität (25°C) | Epoxidwert |
|---|---|---|
| 80 g Epoxidharz GRILONIT G 1302 (Emser Werke) | 9.000-10.000 mPas | 0,50-0,53 |
| 20 g Fumarsäure-di-n-ethylester | 30 mPas | --- |
| 100 g modifiziertes Epoxidharz | 7.000 mPas | 0,52-0,54 |

Nach Zugabe von 12 g Dipropylentriamin setzt nach 5 Minuten eine exotherme Reaktion ein und nach 5 Stunden ist das Gemisch vernetzt. Die Shore-A-Härte beträgt 70.

Die erfindungsgemäss hergestellten, niedrigviskosen Epoxidharze können je nach Verwendungszweck mit üblichen Füllstoffen, wie z.B. Schwerspat, Kreide, Sand und/oder Farbpigmenten, abgemischt werden.

Beispiel 4

30 Gew.-Teile modifiziertes Epoxidharz gemäss Beispiel 1 werden mit 5 Gew.-Teilen Titandioxid, 1 Gew.-Teil Eisenoxidschwarz und 64 Gew.-Teilen Quarzsand der Körnung 0,4 bis 0,7 mm gemischt. Nach Zumischen von 6 Gew.-Teilen Trimethylhexamethylendiamin erhält man einen Epoxidharzmörtel, der 2 Stunden verarbeitbar ist und nach 24 Stunden ausgehärtet ist.

Beispiel 5

| | Viskosität (25°C) | Epoxidwert |
|---|---|---|
| 80 g Epoxidharz EUREPOX 773 (Schering) | 11.000-13.000 mPas | 0,51-0,54 |
| 20 g Vinylpropionat | 4 mPas | --- |
| 100 g modifiziertes Epoxidharz | 120 mPas | 0,52 |

Nach Zugabe von 47 g Trimethylhexamethylendiamin setzt nach 30 Sekunden eine exotherme Reaktion ein und die Mischung härtet zu einer festen Masse mit der Shore-D-Härte von 70 durch.

0159035

# P A T E N T A N S P R Ü C H E

1. Verwendung von Verbindungen der Formel

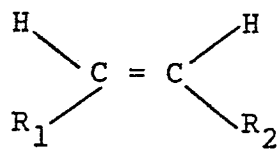

wobei

$R_1$ H, $-\overset{O}{\overset{\|}{C}}-O-C_nH_{2n+1}$ oder 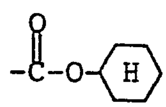 ,

$R_2$ $-O-\overset{O}{\overset{\|}{C}}-C_nH_{2n+1}$, $-\overset{O}{\overset{\|}{C}}-O-C_nH_{2n+1}$ oder

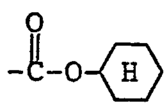 und

n eine ganze Zahl von 1 bis 18 bedeuten, mit der Einschränkung, dass bei $R_1$ = H der Rest $R_2$ $-O-\overset{O}{\overset{\|}{C}}-C_nH_{2n+1}$ darstellt, als reaktive Verdünner für Epoxidharze.

2. Verwendung der Verbindungen nach Anspruch 1, wobei $R_1$ und $R_2$ jeweils $-\overset{O}{\overset{\|}{C}}-O-C_nH_{2n+1}$ bedeuten und n die in Anspruch 1 angegebene Bedeutung besitzt, zu dem Zweck gemäss Anspruch 1.

3. Verwendung der Verbindungen nach Anspruch 1 oder 2, wobei n eine ganze Zahl zwischen 2 und 12 darstellt, zu dem Zweck gemäss Anspruch 1.

4. Verwendung der Verbindungen nach Anspruch 1 oder 2, wobei n eine ganze Zahl zwischen 2 und 8 darstellt, zu dem Zweck gemäss Anspruch 1.

5. Verwendung der Verbindungen nach Anspruch 1, wobei $R_1$ = H und $R_2$ = $-O-\overset{O}{\overset{\|}{C}}-C_nH_{2n+1}$, darstellt, wobei n die in den Ansprüchen 1 bis 4 angegebenen Bedeutungen besitzt, zu dem Zweck gemäss Anspruch 1.

6. Verwendung von Maleinsäure-di-n-ethylester, Fumarsäure-di-n-ethylester oder Vinylpropionat zu dem Zweck gemäss Anspruch 1.

7. Verwendung der Verbindungen nach einem oder mehreren der Ansprüche 1 bis 6 in einer Menge von 10 bis 40 Gew.%, bezogen auf die Gesamtzusammensetzung aus Epoxidharz, Härter und gegebenenfalls Füllstoffen, zu dem Zweck gemäss Anspruch 1.

8. Verwendung gemäss Anspruch 7, wobei die Menge der Verbindungen als reaktiver Härter 15 bis 25 Gew.%, bezogen auf die Gesamtzusammensetzung von Epoxidharz, Härter und gegebenenfalls Füllstoffen, beträgt, zu dem Zweck gemäss Anspruch 1.

9. Verwendung der Verbindungen nach einem oder mehreren der Ansprüche 1 bis 6 als reaktive Verdünner für Epoxidharze zur Erhöhung der Biege-, Zug- und Druckfestigkeit nach Aushärtung.

10. Verwendung der Verbindungen nach einem oder mehreren der Ansprüche 1 bis 6 zu dem Zweck gemäss Anspruch 1,in Kombination mit Epoxidharz, Härter und üblichen Zuschlagstoffen als Reparaturmörtel, Fugenmasse, Injektionsharz für Betonbauten sowie streichfähige Beschichtungen.

11. Verwendung nach Anspruch 10 für Epoxidharz einer Viskosität im Bereich von 1.000 bis 13.000 mPas.

12. Epoxidharzmasse mit einem Gehalt an Verbindungen gemäss Ansprüchen 1 bis 6 in einer Menge von 10 bis 40 Gew.%, bezogen auf die Gesamtzusammensetzung aus Epoxidharz, Härter und gegebenenfalls üblichen Zuschlagstoffen, wobei die Epoxidharzmasse von flüchtigen, an der Aushärtung nicht teilnehmenden Lösungsmitteln frei ist, als Reparaturmörtel, Fugenmasse, Beschichtungsmasse oder Injektionsmasse für Betonbauten.